# EUROPEAN PATENT SPECIFICATION

(11) **EP 1 553 666 B1**
(45) Date of publication and mention of the grant of the patent: **31.05.2006**
(21) Application number: 04290046.4
(22) Date of filing: 08.01.2004
(51) Int. Cl.: H01S 3/30, H01S 3/067

(54) **Cascaded Raman laser with unpaired reflector**
Kaskadierter Ramanlaser mit ungepaartem Reflektor
Laser raman cascadé avec réflecteur appari

(43) Date of publication of application: 13.07.2005
(73) Proprietor: ALCATEL, 75008 Paris (FR)
(72) Inventor: Leplingard, Florence, 78350 Jouy-en-Josas (FR); Borne, Sophie, 91590 D'Huison Longueville (FR)
(74) Representative: Rausch, Gabriele

(56) References cited:
- US-A- 5 323 404
- RIEDEL P ET AL: "Output power stabilization of cascaded Raman fiber lasers" CONF LASERS ELECTRO OPT EUR TECH DIG; CONFERENCE ON LASERS AND ELECTRO-OPTICS EUROPE - TECHNICAL DIGEST 1998 IEEE, PISCATAWAY, NJ, USA, 1998, page 74, XP002285046
- CHEN C-J ET AL OPTICAL SOCIETY OF AMERICA / INSTITUTE OF ELECTRICAL AND ELECTRONICS ENGINEERS: "Instability in raman amplifiers caused by distributed rayleigh reflection" OPTICAL FIBER COMMUNICATION CONFERENCE. (OFC). POSTCONFERENCE DIGEST. ATLANTA, GA, MARCH 23 - 28, 2003, TRENDS IN OPTICS AND PHOTONICS SERIES. (TOPS), WASHINGTON, DC : OSA, US, vol. TOPS. VOL. 86, 23 March 2003 (2003-03-23), pages 157-157, XP010680196 ISBN: 1-55752-746-6
- LEPLINGARD F ET AL OPTICAL SOCIETY OF AMERICA / INSTITUTE OF ELECTRICAL AND ELECTRONICS ENGINEERS: "FWM-assisted raman laser for second- order raman pumping" OPTICAL FIBER COMMUNICATION CONFERENCE. (OFC). POSTCONFERENCE DIGEST. ATLANTA, GA, MARCH 23 - 28, 2003, TRENDS IN OPTICS AND PHOTONICS SERIES. (TOPS), WASHINGTON, DC : OSA, US, vol. TOPS. VOL. 86, 23 March 2003 (2003-03-23), pages 431-432, XP010680540 ISBN: 1-55752-746-6
- FRIGNAC Y ET AL: "Transmission of 256 wavelength-division and polarization-division-mul tiplexed channels at 42.7Gb/s (10.2Tb/s capacity) over 3*100km of TeraLight TM fiber" OPTICAL FIBER COMMUNICATIONS CONFERENCE, ANAHEIM, CA, USA, 17-22 MARCH 2002, POSTCONFERENCE TECHNICAL DIGEST, vol. 2, 17 March 2002 (2002-03-17), pages FC5 1-3, XP002285047 WASHINGTON, DC, OPT SOC AMERICA, USA ISBN: 1-55752-701-6
- BOUTEILLER J -C ET AL: "Dual-order Raman pump providing improved noise figure and large gain bandwidth" OPTICAL FIBER COMMUNICATIONS CONFERENCE, ANAHEIM, CA, USA, 17-22 MARCH 2002, POSTCONFERENCE TECHNICAL DIGEST, vol. 2, 17 March 2002 (2002-03-17), pages FB3 1-3, XP002285048 WASHINGTON, DC, OPT SOC AMERICA, USA ISBN: 1-55752-701-6
- NORMANDIN X ET AL: "Experimental assessment of phospho-silicate fibers for three-wavelength (1427 nm, 1455 nm, 1480 nm) reconfigurable Raman lasers" OPTICAL FIBER COMMUNICATIONS CONFERENCE, ANAHEIM, CA, USA, 17-22 MARCH 2002, POSTCONFERENCE TECHNICAL DIGEST, vol. 1, 17 March 2002 (2002-03-17), pages 9-11, XP002285049 WASHINGTON, DC, OPT SOC AMERICA, USA ISBN: 1-55752-701-6

## Description

### Technical Field

The present invention relates to a Raman laser for the emission of Raman radiation and to an apparatus for Raman amplification comprising such Raman laser. Furthermore, it is related to a method for producing Raman radiation.

### Background of the invention

Optical fiber technology is currently applied in communication systems to transfer information, e.g., voice signals and data signals, over a long distances as optical signals. Over such long distances, however, the strength and quality of a transmitted optical signal diminishes. Accordingly, techniques have been developed to regenerate or amplify optical signals as they propagate along an optical fiber.
One well known amplifying technique exploits an effect called Raman scattering to amplify an incoming information bearing optical signal. Raman scattering describes the interaction of light with molecular vibration of the material in which the light propagates. Incident light scattered by molecules experience a downshift in frequency from the power bearing optical pump radiation. This downshift in frequency (or increase in wavelength) from the pump wavelength is referred to as the Stokes shift and the corresponding scattered light as Stokes line. The extent of the downshift and the shape of the Raman gain curve is determined by the molecular vibrational frequency modes of the transmission medium. In amorphous materials, such as silica, molecular vibrational frequencies spread into bands which overlap and provide a broadband wide gain curve.

Some initial pumping wavelength is advantageously used by injecting it together with a signal wavelength to be amplified into a Raman active transmission medium (e.g. fused silica). Providing that the signal wavelength to be amplified is within the Raman gain of said initial pumping wavelength (e.g., about 100nm at 1550nm in silica), then these signal wavelengths will experience optical gain generated by, and at the expense of, the initial pumping wavelength. In other words, this pumping wavelength amplifies the signal wavelength and, in so doing, it is diminished in strength. This gain process is called stimulated Raman scattering and is a well known technique for amplifying an optical signal.

The development of high intensity continuous wave radiation of a wavelength that is of interest for optical communications (e.g. around 1.55µm) ends up in the use of cascaded Raman laser based on such stimulated Raman scattering. In US 5,323,404 is described such an example of cascaded Raman laser. Fig. 1 illustrates such prior art with a Raman laser 10 comprising one or more pairs of reflectors (21, 21', 22, 22', 23, 23', 24, 24', 25, 25'), spaced apart, with reflectors of each pair having the same center wavelength. The reflectors typically are in line refractive index Bragg reflectors structured in SiO₂-based optical fiber with Ge containing core, each pair of reflectors providing an optical cavity in a fiber. Such an optical cavity includes at least a portion of Raman fiber 17 where the stimulated Raman scattering which creates the gain will take place. Cavities that are neighbors in wavelengths differ in wavelengths usually by one Stokes shift, the longer wavelength of two consecutive Stokes shifts lying within the Raman gain spectrum of the previous Stokes shift. Radiation that is resonating in one of the optical cavities will be referred to as a Stokes lines.

To the Raman laser 10 is coupled through a coupler16 some initial pump radiation at wavelength λ_{PO} coming from a pump source 15. Such Raman laser 10 is adapted for emission of radiation at its output 19 of a wavelength λ_{RR} longer than the initial pump radiation λ_{PO}.

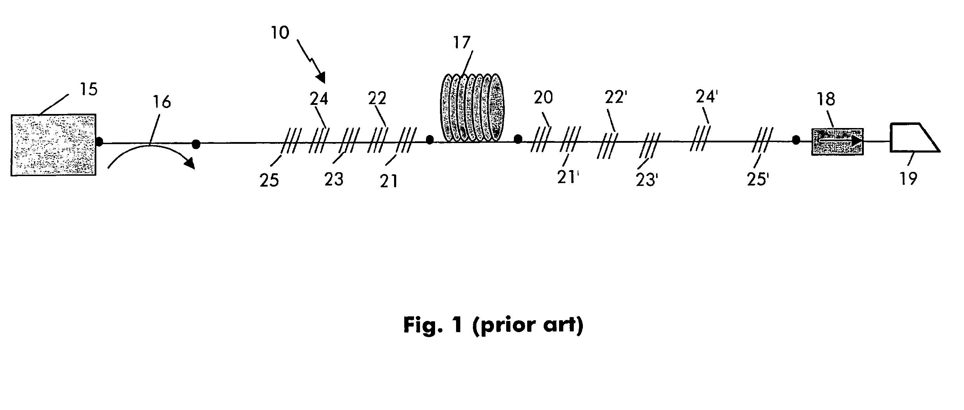

In many potentially important applications of cascaded Raman laser, more than one reflector pair are used as in the example shown on figure 1. For instance, a laser having at its output a Raman radiation λ_{RR} of about 1.5*µ*m and using an initial pump radiation λ_{PO} of about 1.1*µ*m may require five reflector pairs (21, 21'), ... (25, 25'). Not only is a Raman laser with so many reflectors difficult to manufacture since the two members of each pair of reflectors must have essentially the same center wavelength, but the unwanted attenuation due to the multiplicity of reflectors can be significant. For instance, a Stokes line can experience up to 0.5 dB loss as the radiation passes through each output reflectors. And it is very difficult to get fiber Bragg gratings with reflection coefficients as low as a few tens of percent. An alternative can be given by sparing the reflector at the output side of an optical resonant cavity possibly the one corresponding to the Raman radiation or the one of the seed radiation (see below for seed radiation). This is only possible if that missing reflector is replaced by a cleaved fiber end. It is such cleaved end which will provide sufficient reflectivity (Fresnel reflectivity) of about 4% for setting up the optical resonant cavity. But, as known by the man skilled in the art it is not possible to reach a reflectivity of substantially less than 4% using Fresnel reflection.

### Summary of the invention

In view of the above, it is an object of the present invention to develop a Raman laser for the emission of Raman radiation with an optimized and possibly maximized output power. Furthermore, it is also an object to apply a method for producing such Raman radiation without implying a substantial increase in costs comparing to prior arts.

This object is achieved in accordance with the invention by the use of a Raman laser as defined in claim 1. The invention also relates to a method for producing Raman radiation as defined in claim 7. The invention provides a Raman laser with a particular optical resonant cavity for the electromagnetic radiation of wavelength at the Raman radiation λ_{RR}. Such resonant cavity is made out of an unpaired reflector r_{RR} with a reflecting wavelength corresponding to said Raman radiation λ_{RR}. The second reflector at the output reflector needed to build an optical resonant cavity is advantageously defined by Rayleigh scattering to take place at least at a portion of the optical fiber between the reflector r_{RR} and the output of that Raman laser. Such Rayleigh scattering results from random localised variations of the molecular positions in glass that create random inhomogeneities of the reflective index. Such random inhomogeneities act as tiny scatter centers. Un-like in prior arts, Rayleigh's scattering will now no more be a noisy effect but in contrary be exploited to optimize the output of a Raman laser according to the invention. With the use of the Rayleigh scattering as a complementary reflector to be associated with the unpaired reflector, it is then possible to obtain an optical resonant cavity for the Raman radiation λ_{RR} with an output reflectivity of less than 1%. Advantageously, the reflectivity of such defined output reflector will be more in the range of few tens of percent possibly as small as 0.1%.

Such a Raman laser according to the invention is particularly appropriate to be used as a second order Raman laser with the Raman radiation λ_{RR} being a Stokes line obtained from the last but one applied cascaded stimulated Raman scattering. Such a second order Raman laser comprises at least a further optical resonant cavity defined by a pair of reflectors (r_{seed}, r'_{seed}), with a reflecting wavelength corresponding to a seed radiation λ_{seed}. Each such seed radiation corresponds to a Stokes line obtain from the last applied cascaded stimulated Raman scattering in the Raman laser according to the invention. Advantageously, the optical resonant cavity for the seed radiation comprises an output reflector r'_{seed} with a tunable reflectivity for its reflecting wavelength λ_{seed}. In such a way, it is possible to vary the power of the seed radiation preferably from 0 to more than 300mW.

Only by the use of a Raman laser according to the invention, it is possible to control the power of the seed radiation with such high accuracy. Among other things, a reflectivity of less than 1% for the "output reflector" of the Raman radiation λ_{RR} allows to use an output reflector r'_{seed} for the seed radiation with a tunable reflectivity from 0 to more than 25%. In such a way can be advantageously optimised the control of the power of the seed radiation. This can be achieved by the use of a tunable fiber Bragg grating for the output reflector r'_{seed}.

Advantageous developments of the invention are described in the dependent claims, the following description and the drawings.

### Description of the drawings

An exemplary embodiment of the invention will now be explained further with reference to the attached drawings in which:
- Fig. 1: is a schematic view of a Raman laser together with a pump source according to the prior art;
- Fig. 2: is a Raman laser according to the present invention;
- Fig. 3: is a Raman laser used as a second order Raman laser according to the invention;
- Fig. 4a: is an example of the different Stokes shifts used for a second order Raman laser according to the invention.
- Fig. 4b: is a Raman gain for the 1351,5nm wavelength according to Fig. 4a

### Detailed description of preferred embodiments

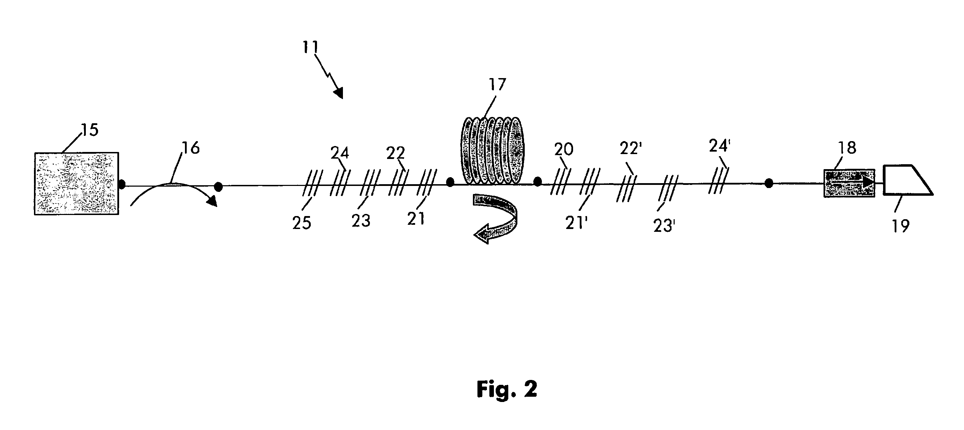

Fig. 2 shows a Raman laser 11 according to the invention. Such a Raman laser 11 comprises some lengths of optical fiber used as Raman fiber 17. That Raman fiber 17 is surrounded on both part by a number of reflectors (rᵢ, r'ᵢ). At the present example described in figure 2 are five reflectors 21, 22, ..., 25 on the input side of the Raman laser 11 and five reflectors 20, 21', ..., 24' on its output side. All these reflectors 20, 21, 21', ..., 24, 24', 25, are preferably made by some fiber Bragg gratings structured on said optical fiber. But other kind of reflectors could be conceivable.

The Raman laser 11 is coupled on its input side via a coupler 16 with a pump source 15. This pump source will provide initial pump radiation at wavelength λ_{PO} into the Raman laser 11. On the output side of the Raman laser 11 is put an isolator 18 to protect it from any radiation coming from outside via its output. That output is characterized by a tilted cleaved end face 19 such to avoid a further undesirable reflector.

A Raman laser according to the invention is made of at least one (n=1) space apart pair (i=1, ..., n) of reflectors (rᵢ, r'ᵢ). In the present case of figure 2 is depicted a Raman laser 11 with four (n=4) space apart pairs of reflectors (21, 21'), ..., (24, 24'). The two reflectors of a pair have singular specific reflecting wavelengths λᵢ (i=1, ..., 4). In such a way, each pair defines a different optical resonant cavity for electromagnetic radiation of wavelength at said respective reflecting wavelength λᵢ. Each of the optical resonant cavities comprises at least a portion of the Raman fiber 17 for the take place of stimulated Raman scattering. In the present case as shown on figure 2, all the four optical resonant cavities comprise almost the same portion of the Raman fiber 17. But also a successive i.e. sequential setup or overlapping to various degrees of the different optical resonant cavities with different portions of the Raman fiber 17 could be considered.

The optical resonant cavities are chosen such to build a cascaded Raman laser. Let's consider as an example a Raman laser 11 with an initial pump radiation at wavelength λ_{PO}=1117nm. That initial pump radiation is provided by the pump source 15 and coupled by the coupler 16 into the Raman laser 11. At the output side of that Raman laser 11 is placed a reflector 20 with a specific reflecting wavelength corresponding to that initial pump radiation λ_{pO}. Latter will give a Stokes line at approximately 1167nm due to stimulated Raman scattering taking place in the Raman fiber 17. The first pair of reflectors (21, 21') of that cascaded Raman laser will be chosen with a reflecting wavelength at that value 1167nm. That first optical resonant cavity will provide a Stokes line at 1223nm corresponding to the reflecting wavelengths of the second pair of reflectors (22, 22'). The next two pairs of reflectors (23, 23'), (24, 24') are defined with reflecting wavelengths respectively at 1284nm, 1351 nm corresponding to successive Stokes line of that cascaded Raman laser. In the present case, the Raman laser 11 comprises at its input side a further reflector 25 at the reflecting wavelength 1427nm. This reflector 25 is one of the two reflectors for the last used Stokes line giving the emission of the Raman radiation λ_{RR}=1427nm of the Raman laser 11. The second reflector needed to build the corresponding optical resonant cavity for that electromagnetic radiation at λ_{RR} is no more given by a reflector as such but by the Rayleigh scattering to take place at least at a portion of said optical Raman fiber 17. The main difference between the Raman laser 11 according to the invention and a Raman laser 10 according to prior art (see Fig. 1) is based precisely on the replacement of the one reflector 25' at the output side of the Raman laser 10 of the optical resonant cavity for the Raman radiation λ_{RR} by the use of the Rayleigh scattering. All the reflectors (20, 21, 21', ..., 24', 25) of the Raman laser 11 on figure 2 are chosen with a reflectivity at around 99%. The reflectivity of Rayleigh scattering does not exceed 1% and is more in the range of 0.1%. In such a way, a Raman laser 11 according to the invention will have the big advantage to provide a Raman radiation λ_{RR} with a much higher power as in prior art. Indeed, the Raman laser 10 on figure 1 still includes the reflector 25' with a reflectivity which can not be decreased below 5%. It is simply not possible to structure a reflector with a substantially less reflectivity than 5%.

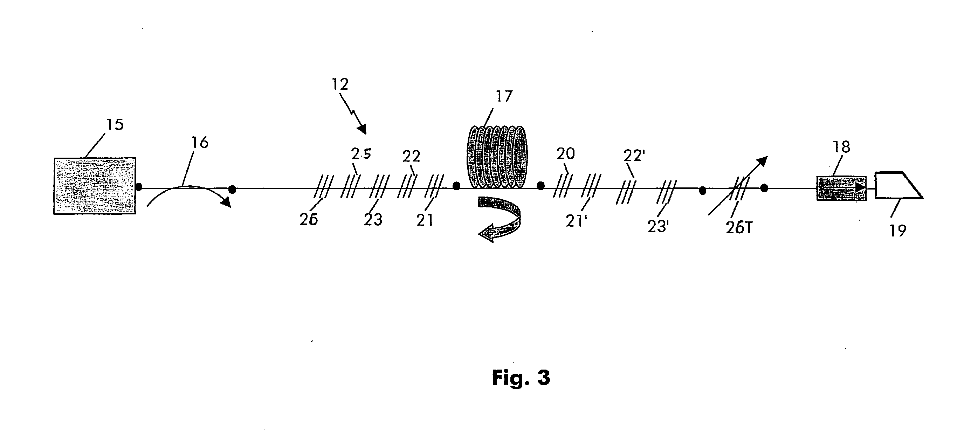

On figure 3 is shown a Raman laser 12 used according to the invention as a second order Raman laser. In a same way as the Raman laser 11 of figure 2, the Raman laser 12 is coupled via a coupler 16 to a pump source 15 for the initial pump radiation at wavelength λ_{PO}. Furthermore, the Raman laser 12 comprises a Raman fiber 17 surrounded by reflectors (20, 21, 21', ..., 23', 25, 26, 26). The Raman laser 12 comprises further at its output an isolator 18 and a slanted cleaved output 19.

As a second order Raman laser, the Raman radiation λ_{RR} is given by a Stokes line obtain from the last but one applied cascaded stimulated Roman scattering. If we choose the same example as for figure 2, then the Raman radiation λ_{RR} is equal to 1351 nm. It is the resonant cavity with a reflecting wavelength at that Raman radiation which will be defined at the output side of the Raman laser 12 by the Rayleigh scattering instead of a reflector. The resonant cavity is defined at the input side of the Raman laser 12 by a usual reflector r_{RR}, 25.

The Raman laser 12 when used as a second order Raman laser comprises at least a further optical resonant cavity defined by a pair of reflectors (r_{seed}, r'_{seed}) with a reflecting wavelength corresponding to a seed radiation λ_{seed} of said second order Raman laser. The Raman laser 12 on figure 3 will provide a single seed radiation λ_{seed} at, if using same example as previously, 1427nm. That seed radiation is given by the optical resonant cavity (26,26T). The reflector 26T of that optical resonant cavity at the output side of the Raman laser 12 is preferably but not exclusively made by a tunable reflector allowing to vary the seed radiation power from 0 to more than 300mW. Such a tunable reflector 26T could be given by a fiber Bragg grating with a reflectivity tuned using some e.g. heating procedure or bending procedure. In such a way, it is possible to obtain a reflector with a reflectivity tunable between 0 to more than 25%.

A Raman laser according to the invention when used as a second order Raman laser as shown on figure 3 will have the advantage to provide a Raman radiation at a high power due to the extremely low reflectivity around 0.1% of the Rayleigh scattering. This allows to tune easily the reflectivity of the output reflector r'_{seed} 26T around e.g. 25% to better control the power of the seed radiation at around few hundred mW.

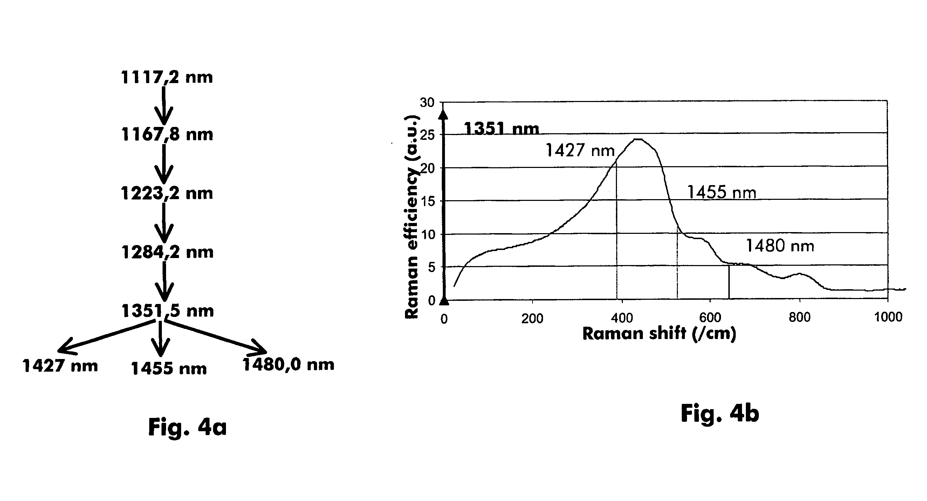

It is also conceivable to use a Raman laser as a second order Raman laser according to the invention with several seed radiations. On figure 4a is described such an example starting with an initial pump radiation at wavelength λ_{PO}=1117.2nm. This radiation will give a first Stokes shift at 1167,8nm followed in the cascaded Raman laser by further Stokes shift at 1223,2nm, 1284,2nm and 1351,5nm. It is the last radiation of the cascaded radiations i.e. 1351,5nm which will be used as the Raman radiation λ_{RR}, i.e. being given by an optical resonant cavity defined by a reflector r_{RR} at the input side of the Raman laser and by Rayleigh scattering to take place in the Raman fiber of that Raman laser. On figure 4a is shown that three further seed radiations namely at 1427.0nm, 1455.0nm, 1480.0nm are extracted from that Raman laser. This is possible by using three different optical resonant cavities similar to the optical cavity (26, 26T) shown on figure 3. The respective reflecting wavelengths of three optical resonant cavities must be defined within the Raman shift given by the Raman radiation i.e. at a wavelength λ_{RR} equal approximately to 1351,5nm itself given by the Stokes line obtained from the last but one applied cascaded stimulated Raman scattering.

Due to the extremely low reflectivity of the Rayleigh scattering used as the reflector at the output of the Raman laser according to the invention for the Raman radiation, it is important to protect such a Raman laser using an isolator 18 from any possible noisy radiation. Such radiation are usually present on any optical systems and could enter in the Raman laser when latter is installed into an apparatus using its Raman radiation as Raman pump radiation.

## Claims

1. A cascaded Raman laser (11, 12) for the emission of Raman radiation at a wavelength λ_{RR} comprising:
a length of optical fiber (17);
a pump source (15) for introducing initial pump radiation at wavelength λ_{P0} into said optical fiber (17);
at least one spaced apart pair of reflectors (21, 21' 22, 22', 23, 23', 24, 24'), the two reflectors of each pair having a similar specific reflecting wavelength λᵢ, each pair defining a different optical resonant cavity for electromagnetic radiation of said respective reflecting wavelength λᵢ, and wherein the optical resonant cavities comprise at least a portion of said optical fiber (17) for the occurrence of stimulated Raman scattering,
**characterized in that**
the laser additionally comprises an optical resonant cavity for electromagnetic radiation with a wavelength of the Raman radiation λ_{RR}, said cavity being made, at the side where said initial pump radiation is introduced into said optical fiber (17), of a reflector (25) with a reflecting wavelength corresponding to said Raman radiation λ_{RR} and, at the output side, of a reflector defined by Rayleigh scattering to take place at least at a portion of said optical fiber (17) thereby resulting in a reflectivity of less than 1% for such defined output reflector; and
**in that** said optical resonant cavities are chosen such to build a cascaded Roman laser in which the radiation at the wavelengths λᵢ and λ_{RR} is generated by cascaded stimulated Roman scattering.

2. The Raman laser according to claim 1, **characterized in that** all the reflectors of the optical resonant cavities except for the one defined by the Rayleigh scattering are defined by fiber Bragg gratings preferably structured on said optical fiber.

3. The Raman laser(12) according to claim 1 **characterized in that** it is adapted for emitting seed radiation with a wavelength λ_{seed} in addition to the radiation at the wavelength λ_{RR}, the laser comprising at least one further optical resonant cavity defined by a further pair of reflectors (26, 26T) with a reflecting wavelength corresponding to said seed radiation λ_{seed}, wherein the Roman radiation λ_{RR} is a Stokes line obtained by the last but one applied cascaded stimulated Raman scattering and the seed radiation λ_{seed} is a Stokes line obtained from the Roman radiation λ_{RR} by the last applied cascaded stimulated Raman scattering.

4. The Roman laser according to claim 3, **characterized in that** the optical resonant cavity for the seed radiation comprises an output reflector (26T) with a tunable reflectivity for its reflecting wavelength λ_{seed} obtained by some external action on the corresponding fiber portion which allows to vary the seed radiation power preferably from 0 to more than 300mW.

5. The Raman laser according to claim 4, **characterized in that** said output reflector (26T) is a fiber Bragg grating with a tunable reflectivity for its reflectivity wavelength λ_{seed} from 0 to more than 25%.

6. An apparatus comprising a Raman laser according to one of the preceding claims.

7. A method for producing Raman radiation at a wavelength λ_{RR} using a Raman loser by applying the steps of:
introducing initial pumping radiation at wavelength λ_{PO} into on optical fiber of said Raman laser;
applying said initial pumping radiation λ_{PO} on optical resonant cavities of said Roman laser with at least one spaced apart pair of reflectors (21, 21' 22, 22', 23, 23', 24, 24'), the two reflectors of each pair having a similar specific reflecting wavelength λᵢ, each pair defining a different optical resonant cavity for electromagnetic radiation of said respective reflecting wavelength λᵢ, and wherein the optical resonant cavities comprise at least a portion of said optical fiber (17) for the occurrence of stimulated Roman scattering,
**characterized by**
applying additionally an optical resonant cavity for electromagnetic radiation with a wavelength of the Roman radiation λ_{RR}, said cavity being made, at the side where said initial pump radiation is introduced into said optical fiber (17) , of a reflector (25) with a reflecting wavelength corresponding to said Raman radiation λ_{RR} and, at the output side of a reflector defined by Rayleigh scattering to take place at least at a portion of said optical fiber (17) thereby resulting in a reflectivity of less than 1%for such defined output reflector; and choosing said optical resonant cavities such to build a cascaded Roman loser in which the radiation at the wavelengths λᵢ and λ_{RR} is generated by cascaded stimulated Raman scattering.

8. The method for producing Raman radiation according to claim 7, **characterized by** emitting a seed radiation with a wavelength λ_{SEED} in addition to the radiation at the wavelength λ_{RR}, the lasercomprising at least one further optical resonant cavity defined by a further pair of reflectors (26, 26T) with a reflecting wavelength corresponding to said seed radiation λ_{SEED}, wherein the Raman radiation λ_{RR} is a Stokes line obtained by the last but one applied cascaded stimulated Raman scattering and the seed radiation λ_{SEED} is a Stokes line obtained from the Raman radiation λ_{RR} by the last applied cascaded stimulated Raman scattering.

9. The method for producing Roman radiation according to claim 8 **characterised by** optimising the output seed radiation power preferably from 0 to more than 300mW using the optical resonant cavity for the seed radiation with on output reflector (26T) defined by a tunable reflectivity for its reflecting wavelength λ_{seed}.

## Patentansprüche

1. Kaskadierter Raman-Laser (11, 12) für die Emission von Raman-Strahlung bei einer Wellenlänge λ_{RR}, umfassend:
eine Länge der optischen Faser (17);
eine Pumpquelle (15) zum Einleiten der Anfangspumpstrahlung bei der Wellenlänge λ_{PO} in die optische Faser (17);
mindestens ein mit Abstand angeordnetes Paar von Reflektoren (21, 21', 22, 22', 23, 23', 24, 24'), wobei die zwei Reflektoren jedes Paars eine ähnliche spezielle reflektierende Wellenlänge λᵢ aufweisen, wobei jedes Paar einen verschiedenen optischen Hohlraumresonator für die elektromagnetische Strahlung der entsprechenden reflektierenden Wellenlänge λᵢ definiert, und in welchem die optischen Hohlraumresonatoren mindestens einen Abschnitt der optischen Faser (17) für das Auftreten der stimulierten Raman-Streuung umfassen,
**dadurch gekennzeichnet, daß**
der Laser außerdem einen optischen Hohlraumresonator für die elektromagnetische Strahlung mit einer Wellenlänge der Raman-Strahlung λ_{RR} umfaßt, wobei der Resonator auf der Seite herzustellen ist, wo die Anfangspumpstrahlung in die optische Faser (17) eines Reflektors (25) mit einer reflektierenden Wellenlänge eingeleitet wird, die der Raman-Strahlung λ_{RR} entspricht, und auf der Ausgangsseite eines Reflektors, der durch die Rayleigh-Streuung definiert ist, die mindestens an einem Abschnitt der optischen Faser (17) stattfinden soll, **dadurch** zu einem Reflexionsvermögen von kleiner als 1 % für solchen definierten Ausgangsreflektor führt; und
daß die optischen Hohlraumresonatoren derart ausgewählt werden, um einen kaskadierten Raman-Laser aufzubauen, in welchem die Strahlung auf den Wellenlängen λᵢ und λ_{RR} durch die kaskadierte stimulierte Raman-Streuung erzeugt wird.

2. Raman-Laser nach Anspruch 1, **dadurch gekennzeichnet, daß** alle Reflektoren der optischen Fiohlraumresonatoren, mit Ausnahme des einen, der durch die Rayleigh-Streuung definiert ist, durch die Faser-Bragg-Gitter definiert werden, die vorzugsweise auf der optischen Faser strukturiert sind.

3. Raman-Laser (12) nach Anspruch 1, **dadurch gekennzeichnet, daß** er für das Emittieren der Seed-Strahlung mit einer Wellenlänge λ_{seed} zusätzlich zu der Strahlung auf der Wellenlänge λ_{RR} angepaßt ist, wobei der Laser mindestens einen weiteren optischen Hohlraumresonator umfaßt, der durch ein weiteres Paar von Reflektoren (26, 26T) mit einer reflektierenden Wellenlänge definiert ist, die der Seed-Strahlung λ_{seed} entspricht, in welchem die Raman-Strahlung λ_{RR} eine Stokes-Linie ist, die durch die vorletzte angewandte kaskadierte stimulierte Raman-Streuung erhalten wurde, und die Seed-Strahlung λ_{seed} eine Stokes-Linie ist, die aus der Raman-Strahlung λ_{RR} durch die letzte angewandte kaskadierte stimulierte Ramarl-Streuung erhalten wurde.

4. Raman-Laser nach Anspruch 3, **dadurch gekennzeichnet, daß** der optische Hohlraumresonator für die Seed-Strahlung einen Ausgangsreflektor (26T) mit einem abstimmbaren Reflexionsvermögen für seine reflektierende Wellenlänge λ_{seed} umfaßt, die durch eine äußere Einwirkung auf dem entsprechenden Faserabschnitt erhalten wurde, welche ermöglicht, die Seed-Strahlungsleistung vorzugsweise von 0 bis über 300 mW zu ändern.

5. Raman-Laser nach Anspruch 4, **dadurch gekennzeichnet, daß** der Ausgangsreflektor (26T) ein Bragg-Gitter mit einem abstimmbaren Reflexionsvermögen für seine Wellenlänge λ_{seed} des Reflexionsvermögens von 0 bis über 25 % ist.

6. Vorrichtung, die einen Raman-Laser gemäß einem der vorhergehenden Ansprüche umfaßt.

7. Verfahren zum Erzeugen von Raman-Strahlung auf einer Wellenlänge λ_{RR} unter Verwendung eines Raman-Lasers durch Anwenden der Schritte:
Einleiten der Anfangspumpstrahlung auf der Wellenlänge λ_{P0} in eine optische Faser des Raman-Lasers;
Anwenden der Anfangspumpstrahlung λ_{P0} auf optische Hohlraumresonatoren des Raman-Lasers mit mindestens einem mit Abstand angeordnetem Paar der Reflektoren (21, 21' 22, 22', 23, 23'. 24, 24'), wobei zwei Reflektoren jedes Paars eine ähnliche spezielle reflektierende Wellenlänge λᵢ aufweisen, jedes Paar einen verschiedenen optischen Hohlraumresonator für die elektromagnetische Strahlung der entsprechenden reflektierenden Wellenlänge λᵢ definiert, und in welchem die optischen Hohlraumresonatoren mindestens einen Abschnitt der optischen Faser (17) zum Auftreten der stimulierten Raman-Streuung umfassen,
**gekennzeichnet durch**
zusätzliches Anwenden eines optischen Hohlraumresonators für die elektromagnetische Strahlung mit einer Wellenlänge der Raman-Strahlung λ_{RR}, wobei der Resonator auf der Seite, wo die Anfangspumpstrahlung in die optische Faser (17) eingeleitet wird, aus einem Reflektor (25) mit einer reflektierenden Wellenlänge, die der Raman-Strahlung λ_{RR} entspricht, und auf der Ausgangsseite aus einem Reflektor, der **durch** die Rayleigh-Streuung definiert ist, die mindestens auf einem Abschnitt der optischen Faser (17) stattfinden soll, **dadurch** zu einem Reflexionsvermögen von kleiner als 1 % für solch definierten Ausgangsreflektor führt, hergestellt ist; und Auswählen der optischen Hohlraumresonatoren derart, um einen kaskadierten Raman-Laser aufzubauen, in welchem die Strahlung auf den Wellenlängen λᵢ und λ_{RR} **durch** die kaskadierte stimulierte Raman-Streuung erzeugt wird.

8. Verfahren zum Erzeugen von Raman-Strahlung nach Anspruch 7, **gekennzeichnet durch** das Emittieren einer Seed-Strahlung mit einer Wellenlänge λ_{SEED} zusätzlich zu der Strahlung auf der Wellenlänge λ_{RR}, wobei der Laser mindestens einen weiteren optischen Hohlraumresonator umfaßt, der **durch** ein weiteres Paar von Reflektoren (26, 26T) mit einer reflektierenden Wellenlänge definiert ist, die der Seed-Strahlung λ_{SEED} entspricht, in welchem die Raman-Strahlung λ_{RR} eine Stokes-Linie ist, die **durch** die vorletzte angewandte kaskadierte stimulierte Raman-Streuung erhalten wurde, und die Seed-Strahlung λ_{SEED} eine Stokes-Linie ist, die aus der Raman-Strahlung λ_{RR} **durch** die letzte angewandte kaskadierte stimulierte Raman-Streuung erhalten wurde.

9. Verfahren zum Erzeugen von Raman-Strahlung nach Anspruch 8, **gekennzeichnet durch** Optimieren der Ausgangs-Seed-Strahlungsleistung vorzugsweise von 0 bis über 300 mW unter Verwendung des optischen Hohlraumresonators für die Seed-Strahlung mit einem Ausgangsreflektor (26T) , der **durch** ein abstimmbares Reflexionsvermögen für seine reflektierende Wellenlänge λ_{seed} definiert ist.

## Revendications

1. Laser Raman en cascade (11, 12) pour l'émission d'un rayonnement de Raman de longueur d'onde λ_{RR} comprenant :
une longueur de fibre optique (17) ;
une source de pompage (15) pour introduire un rayonnement de pompage initial de longueur d'onde λ_{PO} dans ladite fibre optique (17);
au moins une paire de réflecteurs espacés (21, 21', 22, 22', 23, 23', 24, 24'), les deux réflecteurs de chaque paire possédant une longueur d'onde de réflexion spécifique similaire λᵢ, chaque paire définissant une cavité optique résonnante différente pour le rayonnement électromagnétique de ladite longueur d'onde de réflexion respective λᵢ, et dans lequel les cavités optiques résonnantes comprennent au moins une portion de ladite fibre optique (17) pour l'apparition de la diffusion de Raman stimulée,
**caractérisé en ce que**
le laser comprend en outre une cavité optique résonante pour le rayonnement électromagnétique de longueur d'onde du rayonnement de Raman λ_{RR}. ladite cavité étant faite, au niveau du côté où ledit rayonnement de pompage initial est introduit dans ladite fibre optique (17), d'un réflecteur (25) de longueur d'onde de réflexion correspondant audit rayonnement de Raman λ_{RR} et, du côté sortie, d'un réflecteur défini par la diffusion de Rayleigh qui intervient au moins sur une portion de ladite fibre optique (17) aboutissant de ce fait à une réflectivité de moins de 1 % pour le réflecteur de sortie ainsi défini ; et
**en ce que** lesdites cavités optiques résonnantes sont choisies de façon à construire un laser Raman en cascade dans lequel le rayonnement aux longueurs d'onde λᵢ et λ_{RR} est généré par diffusion de Raman stimulée en cascade.

2. Laser Raman selon la revendication 1, **caractérisé en ce que** tous les réflecteurs des cavités optiques résonnantes sauf celui défini par la diffusion de Rayleigh sont définis par des réseaux de Bragg à fibres, structurés de préférence sur ladite fibre optique.

3. Laser Raman (12) selon la revendication 1, **caractérisé en ce qu'**il est adapté pour émettre un rayonnement "seed" (germe) de longueur d'onde λ_{seed} en plus du rayonnement de longueur d'onde λ_{RR}, le laser comprenant au moins une autre cavité optique résonnante définie par une autre paire de réflecteurs (26, 26T) de longueur d'onde de réflexion correspondant audit rayonnement "seed" λ_{seed}, dans lequel le rayonnement de Raman λ_{RR} est une raie Stokes obtenue par l'avant-dernière diffusion de Raman stimulée en cascade appliquée et le rayonnement "seed" λ_{seed} est une raie Stokes obtenue à partir du rayonnement de Raman λ_{RR} par la dernière diffusion de Raman stimulée en cascade appliquée.

4. Laser Raman selon la revendication 3, **caractérisé en ce que** la cavité optique résonnante pour le rayonnement "seed" comprend un réflecteur de sortie (26T) de réflectivité accordable pour sa longueur d'onde de réflexion λ_{seed} obtenue par une action externe sur la portion de fibre correspondante qui permet de faire varier la puissance du rayonnement "seed" de préférence de 0 à plus de 300 mW.

5. Laser Raman selon la revendication 4, **caractérisé en ce que** ledit réflecteur de sortie (26T) est un réseau de Bragg à fibres de réflectivité accordable pour sa longueur d'onde de réflectivité λ_{seed} de 0 à plus de 25 %.

6. Appareil comprenant un laser Raman selon l'une des revendications précédentes.

7. Procédé de production d'un rayonnement de Raman de longueur d'onde λ_{RR} au moyen d'un laser Raman en appliquant les étapes suivantes :
introduire un rayonnement de pompage initial de longueur d'onde λ_{PO} dans une fibre optique dudit laser Raman ;
appliquer ledit rayonnement de pompage initial λ_{PO} sur des cavités optiques résonnantes dudit laser Raman muni d'au moins une paire de réflecteurs espacés (21, 21', 22, 22', 23, 23', 24, 24'), les deux réflecteurs de chaque paire possédant une longueur d'onde de réflexion spécifique similaire λᵢ, chaque paire définissant une cavité optique résonnante différente pour le rayonnement électromagnétique de ladite longueur d'onde de réflexion respective λᵢ, et dans lequel les cavités optiques résonnantes comprennent au moins une portion de ladite fibre optique (17) pour l'apparition de la diffusion de Raman stimulée,
**caractérisé par**
l'application en outre d'une cavité optique résonante pour un rayonnement électromagnétique de longueur d'onde du rayonnement de Raman λ_{RR}, ladite cavité étant faite, au niveau du côté où ledit rayonnement de pompage initial est introduit dans ladite fibre optique (17), d'un réflecteur (25) de longueur d'onde de réflexion correspondant audit rayonnement de Raman λ_{RR} et, du côté sortie, d'un réflecteur défini par la diffusion de Rayleigh qui intervient au moins sur une portion de ladite fibre optique (17) aboutissant de ce fait à une réflectivité de moins de 1 % pour le réflecteur de sortie ainsi défini ; et
le choix desdites cavités optiques résonnantes de façon à construire un laser Raman en cascade dans lequel le rayonnement aux longueurs d'onde λᵢ et λ_{RR} est généré par diffusion de Raman stimulée en cascade.

8. Procédé de production d'un rayonnement de Raman selon la revendication 7, **caractérisé par** l'émission d'un rayonnement "seed" de longueur d'onde λ_{seed} en plus du rayonnement de longueur d'onde λ_{RR}, le laser comprenant au moins une autre cavité optique résonnante définie par une autre paire de réflecteurs (26, 26T) de longueur d'onde de réflexion correspondant audit rayonnement "seed" λ_{seed}, dans lequel le rayonnement de Raman λ_{RR} est une raie Stokes obtenue par l'avant-dernière diffusion de Raman stimulée en cascade appliquée et le rayonnement "seed" λ_{seed} est une raie Stokes obtenue à partir du rayonnement de Raman λ_{RR} par la dernière diffusion de Raman stimulée en cascade appliquée.

9. Procédé de production d'un rayonnement de Raman selon la revendication 8, **caractérisé par** l'optimisation de la puissance du rayonnement "seed" de sortie de préférence de 0 à plus de 300 mW en utilisant la cavité optique résonnante pour le rayonnement "seed" avec un réflecteur de sortie (26T) défini par une réflectivité accordable pour sa longueur d'onde de réflexion λ_{seed}.
